# EUROPÄISCHE PATENTSCHRIFT

(11) **EP 1 837 567 B1**
(45) Veröffentlichungstag und Bekanntmachung des Hinweises auf die Patenterteilung: **08.10.2008**
(21) Anmeldenummer: 06005676.9
(22) Anmeldetag: 20.03.2006
(51) Int. Cl.: F16K 31/08, F16K 17/34

(54) **Sicherheitsventil zum automatischen Absperren von Gasleitungen**
Safety excess flow valve for gas conduits
Obturateur de sécurité automatique pour conduites de gaz

(43) Veröffentlichungstag der Anmeldung: 26.09.2007
(73) Patentinhaber: InterForge Klee GmbH, 27356 Rotenburg (DE)
(72) Erfinder: Klee, Klaus, 27383 Scheessel (DE)
(74) Vertreter: Griepenstroh, Jörg

(56) Entgegenhaltungen:
- WO-A-98/57082
- DE-A1- 10 352 372
- DE-U1- 29 700 833
- FR-A- 1 302 543
- US-A- 4 257 452
- US-A- 4 874 012
- US-A1- 2003 000 580

## Beschreibung

Die Erfindung betrifft ein Sicherheitsventil zum automatischen Absperren von mit Fluid durchströmten Leitungen gemäß den Merkmalen im Oberbegriff des Patentanspruchs 1.

Durch die DE 103 52 372 A1 zählt ein derartiger, sogenannter Strömungswächter zum Stand der Technik. Bei einem den zulässigen Maximalfluss übersteigenden Fluidfluss wird ein Schließkörper des Strömungswächters gegen einen Ventilsitz verlagert, so dass die Gasleitung im Falle einer Leckage selbsttätig abgesperrt wird. In der DE 103 52 372 A1 wird vorgeschlagen, dass der Schließkörper von einer von Magnetmitteln erzeugten Magnetkraft an einer Haltebrücke gehalten ist. Dadurch können Schwingungen des Schließkörpers vermieden werden, die sich aufgrund der Schwankungen des Fluidflusses ergeben. Die Magnetmittel sollen insbesondere in Form eines Rings angeordnet sein, der von einem zentralen Führungsbolzen durchsetzt ist. Obwohl die in der DE 103 52 372 A1 vorgeschlagene Bauform ausgesprochen kompakt ist, ist die Montage mit einem gewissen Aufwand verbunden, da sehr filigrane Bauteile insbesondere bezüglich der Magnetmittel gehändelt werden müssen. Zudem stellen die ringförmigen Magnete eine teure Sonderbauform dar.

Hiervon ausgehend liegt der Erfindung die Aufgabe zugrunde, das aus der DE 103 52 372 A1 bekannte Sicherheitsventil dahingehend weiterzuentwickeln, dass eine einfache und möglichst kostengünstige Montage mit weitgehend standardisierten Bauteilen möglich ist.

Die Erfindung wird durch ein Sicherheitsventil mit den Merkmalen des Patentanspruchs 1 gelöst.

Neu bei dem erfindungsgemäßen Sicherheitsventil ist, dass zusätzlich zu der Führungsbrücke eine zweite Brückenanordnung in Form einer Fixierbrücke in das Gehäuse eingegliedert wird. In der Offenstellung des Sicherheitsventils liegt der Schließkörper nun nicht mehr an der Führungsbrücke an, da diese sich in Strömungsrichtung hinter dem Ventilsitz befindet, sondern ist über die vorgesehenen Magnetmittel an der gegenüber der Führungsbrücke beabstandeten Fixierbrücke gehalten. Das hat den Vorteil, dass an der Fixierbrücke geometrisch beliebig konfigurierte Magnetmittel angeordnet sein können, so dass auf Standardmagnetmittel zurückgegriffen werden kann, insbesondere auf zylindrisch ausgebildete Magnetmittel. Die Magnetmittel sind bevorzugt zentrisch angeordnet, so dass es nicht zu Kippungen oder Winkelfehlern in Bezug auf den Schließkörper kommt. Dadurch ist sichergestellt, dass sich der Führungsbolzen nicht in der Führungsbohrung der Führungsbrücke verklemmt. Die Fixierbrücke ist in Strömungsrichtung dem Schließkörper und der Führungsbrücke vorgelagert, so dass beiderseits des Ventilsitzes jeweils eine Brücke angeordnet ist.

Ein wesentlicher Vorteil bei dem lösungsgemäßen Sicherheitsventil ist, dass die Rückhaltekraft nicht mehr von einer Feder sondern von dem Magnetmittel aufgebracht wird. Die Magnetkraft verhindert -anders als im Stand der Techniknicht nur das Flattern des Schließkörpers bei Strömungsschwankungen sondern dient selbst als primäres Rückhaltemittel, das keinem nennenswerten Verschleiß unterligt und auch noch nach jahrzehntelangem Einsatz eine definierte Magnetkraft aufweist.

Vorteilhafte Ausgestaltungen der Erfindung sind Gegenstand der Unteransprüche.

Der Schließkörper weist eine Ankerplatte auf, die von einem an der Fixierbrücke platzierten Magnetmittel angezogen wird. Es können Ankerplatten verschiedender Dicken und aus unterschiedlichen Werkstoffen an einem einheitlichen Schließkörper befestigt werden, so dass durch die Dicke und den Werkstoff der Ankerplatte die herrschende Magnetkraft sehr gut einstellbar ist. Dadurch können ohne größere bauliche Veränderungen exakt definierte magnetische Rückhaltekräfte eingestellt werden, so dass das erfindungsgemäße Sicherheitsventil einfach und kostengünstig auf die jeweiligen Anforderungen eingestellt werden kann, wie dies beispielsweise die Prüfnormen einzelner Staaten vorgeben. Auf diese Weise kann gewissermaßen ein Baukastensystem aufgebaut werden, das keine Veränderungen an der Grundkonstruktion erfordert, sondern lediglich die Anpassung einer kleinen Ankerplatte.Es hat sich als vorteilhaft erwiesen, wenn sämtliche an dem Schließkörper angreifenden Kräfte möglichst in der zentralen Achse des Schließkörpers wirken. Daher ist vorgesehen, dass das Zentrum der magnetischen Rückhaltekraft in der Längsachse des Führungsbolzens liegt.

Der Führungsbolzen ist von einer Feder umgeben, die jedoch nicht als Rückhaltefeder wirkt sondern als Rückstellfeder, welche den Schließkörper nach einer Auslösung wieder so weit in Richtung der Fixierbrücke verlagert, dass die Magnetkräfte den Schließkörper wieder anziehen. Es ist daher nicht zwingend erforderlich, dass die Feder im Ruhezustand ständig unter Spannung steht und den Schließkörper gegen die Fixierbrücke drückt. Vielmehr ist denkbar, dass die Feder erst dann eine Kraft auf den Schließkörper ausübt, wenn sich dieser z.B. in einem Abstand von 1 bis 2 mm von der Fixierbrücke befindet. Dadurch wird sichergestellt, dass sich die Federkraft und die Magnetkraft nicht im Auslösezeitpunkt überlagern, sondern erst dann, wenn sich der Schließkörper bereits in Richtung des Ventilsitzes verlagert. Da die Federkraft grundsätzlich kleiner als die Magnetkraft bemessen ist, führt die von der Federkraft ausgehende Rückstellkraft nur zu einer geringfügigen Abbremsung des Schließkörpers während des Schließvorgangs und hat somit keine nachteiligen Auswirkung auf das Auslöseverhalten. Die Feder dient vor allem zur Unterstützung der Magnetkraft während der Rückstellung, da nicht ausgeschlossen werden kann, dass der Schließkörper nach dem Auslösen an derm Ventilsitz bzw. dem Dichtring haftet, was z.B. auf Verschmutzungen zurückzuführen ist, die sich auf dem Dichtring abgelagert haben. Für diesen Fall wird durch die Feder gewissermaßen eine Initialkraft aufgebracht, welche das Anhaften des Schließkörpers an der Dichtung überwindet.

Grundsätzlich ist es sogar möglich vollständig auf die Feder und die von ihr ausgehenden Rückstellkraft zu verzichten, wenn die Magnetkraft selbst eine Rückstellung des Schließkörpers herbeiführen kann. Dabei kommt es entscheidend auf die Fernwirkung der Magnetkraft an, wobei bei einer entsprechend reibungsarmen Lagerung bereits geringe Magnetkräfte ausreichend sind, um den Schließkörper wieder gegen die Fixierbrücke zu ziehen.

Der Führungsbolzen einschließlich der Feder ist von einer mit der Führungsbrücke verbundenen Führungshülse umgeben, die mit der Führungsbrücke verschraubt werden kann, so dass die Vorspannung der Feder durch die Einschraubtiefe der Führungshülse stufenlos einstellbar ist. Über die Einschraubtiefe kann auch festgelgt werden, ob die Feder überhaupt vorgespannt werden soll oder aber erst nach einem bestimmten Leerweg belastet wird.

Ein weiterer Vorteil des lösungsgemäßen Sicherheitsventils ist, dass der Führungsbolzen in einer Führungsbohrung in der Führungshülse gelagert ist sowie in einer Führungsbohrung in der Führungsbrücke. Durch den Wegfall des Magnetmittels an der Führungsbrücke ist es möglich, den Abstand der Führungsbohrungen zu vergrößern, so dass die Führung insgesamt noch exakter wird.

Die Erfindung wird nachfolgend anhand eines in den Zeichnungen dargestellten schematischen Ausführungsbeispiels näher erläutert. Es zeigen:
- Figur 1: einen vertikalen Längsschnitt durch ein in eine Gasleitung eingegliedertes Gehäuse eines Sicherheitsventils in der Offenstellung;
- Figur 2: das Sicherheitsventil der Figur 1 in der Schließstellung;
- Figur 3: einen vertikalen Längsschnitt gemäß der Figur 1 zur Verdeutlichung der Schnittebenen B-B und C-C;
- Figur 4: eine Schnittdarstellung durch das Sicherheitsventil der Figur 3 entlang der Linie B-B;
- Figur 5: eine Schnittdarstellung durch das Sicherheitsventil der Figur 3 entlang der Linie C-C und
- Figur 6: einnicht erfindungsgemäßes Beispiel eines Sicherheitsventils ohne Feder.

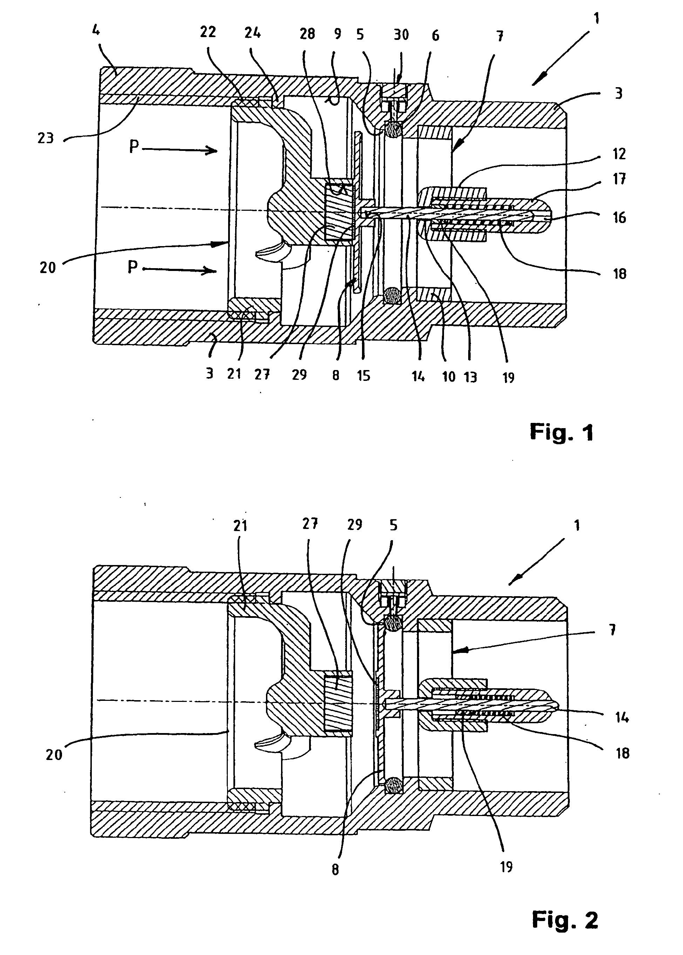

Figur 1 zeigt ein Sicherheitsventil 1, das dafür vorgesehen ist, in eine Gasleitung eingeschraubt zu werden. Hierzu besitzt das Sicherheitsventil 1 ein Gehäuse 2 mit endseitigen Gewindeanschlüssen 3, 4. Die Strömungsrichtung des Gases ist mit den Pfeilen P gekennzeichnet. In dem Gehäuse 2 befindet sich ein Ventilsitz 5 mit einem Dichtring 6, der in eine umlaufende Nut des Gehäuses 2 eingesetzt ist. In Strömungsrichtung hinter dem Ventilsitz 5 ist in das Gehäuse 2 eine Führungsbrücke 7 eingesetzt, die einen gegenüber der Führungsbrücke 7 relativ verlagerbaren Schließkörper 8 führt. Der Schließkörper 8 ist in Richtung des Ventilsitzes 5 verlagerbar und ermöglicht bei Überschreiten eines Maximalflusses ein Absperren der Gasleitung. Der Schließkörper 8 ist in Figur 1 in der Offenstellung dargestellt. Figur 2 zeigt den Schließkörper 8 in der Schließstellung. Wenn sich der Schließkörper 8 in der Offenstellung befindet, kann das Gas den Schließkörper 8 umspülen, so dass das Gas den Ventilsitz 5 passieren kann. Übersteigt der Fluidfluss einen Maximalwert, wird der Schließkörper 8 in die Schließposition gemäß Figur 2 verlagert, so dass der Schließkörper 8 an dem Dichtring 6 des Ventilsitzes 5 anliegt. In dem Gehäuse 2 ist im Bereich des Schließkörpers 8 eine umlaufende Aussparung 9 ausgebildet, die ein Umströmen des Schließkörpers 8 ermöglicht, ohne dass hierbei relevante Druckverluste auftreten.

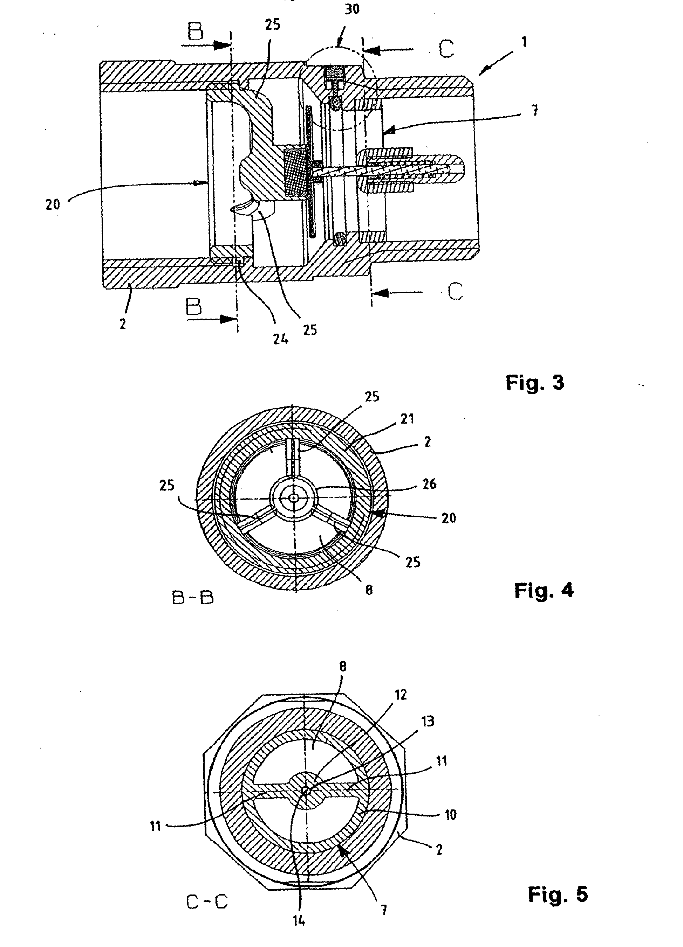

Die Führungsbrücke 7 besitzt einen Ringabschnitt 10, über welchen die Führungsbrücke 7 in dem Gehäuse 2 gehalten ist. Der Ringabschnitt 10 ist über zwei diametral angeordnete Haltebeine (Figur 5) mit einer zentralen, innerhalb der Ebene des Ringabschnitts 10 angeordneten Führungsnabe 12 verbunden. Die Führungsnabe 12 weist eine zentrale Führungsbohrung 13 auf, in welcher ein mit dem Schließkörper 8 verbundener Führungsbolzen 14 axial verschieblich gelagert ist. Der Führungsbolzen 14 greift auf der dem Ventilsitz 5 zugewandten Seite des tellerförmig konfigurierten Schließkörpers 8 in eine zentrale Sackbohrung 15 des Schließkörpers 8 ein und ist dort mit diesem fest verbunden, insbesondere verklebt. Der Führungsbolzen 14 ist so lang bemessen, dass er in der Offenstellung des Schließkörper 8 nicht nur eine Führungsbohrung 13 in der Führungsnabe 12 durchsetzt, sondern auch eine weitere Führungsbohrung 16 in einer mit der Führungsnabe 12 verschraubten Führungshülse 17. Innerhalb der Führungshülse 17 ist eine Feder 18 angeordnet, die mit ihrem einen Ende einer die Führungsbohrung 16 der Führungshülse 17 umgebenden axialen Stützfläche abgestützt ist und andererseits an einem Kragen 19, der fest mit dem Führungsbolzen 14 verbunden ist. Figur 2 zeigt, dass die Feder 18 in der Schließstellung des Sicherheitsventils gestaucht wird, weil sich der Kragen 19 zusammen mit dem Führungsbolzen 14 in Strömungsrichtung verlagert hat. Die durch die Führungshülse 17 gegenüber der Umgebung gekapselt angeordnete Feder 18 ist dem freien Gasstrom nicht unmittelbar ausgesetzt, so dass eine Verschmutzung der Feder 18 vermieden wird.

Die zweite wesentliche Komponente des lösungsgemäßen Sicherheitsventils 1 ist eine Fixierbrücke 20, die dem Schließkörper 8 in Strömungsrichtung vorgelagert ist. Die Fixierbrücke 20 besitzt einen Ringabschnitt 21, der mit einem Außengewinde 22 versehen ist, so dass die Fixierbrücke 20 in das korrespondierende Innengewinde 23 des Gehäuses 2 eingeschraubt werden kann. Die Einschraubtiefe ist durch einen kragenartig außen umlaufenden Anschlag 24 begrenzt und definiert. Von dem Ringabschnitt 21 erstrecken sich drei Stützbeine 25 in das Zentrum der Fixierbrücke 20 (Figur 4) und bilden dort ebenfalls eine zentrale Nabe 26. Die Nabe 26 der Fixierbrücke 20 dient allerdings nicht zur Führung des Schließkörpers 8, sondern ausschließlich zur Aufnahme eines Magnetmittels 27 in Form eines zylindrisch konfigurierten Permanentmagneten, der in einer dem Schließkörper 8 zugewandten Tasche 28 aufgenommen ist. Das Magnetmittel 27 zieht eine Ankerplatte 29 an, die auf der der Fixierbrücke 20 zugewandten Seite des Schließkörpers 8 platziert ist. Der Durchmesser der Ankerplatte 29 entspricht in diesem Ausführungsbeispiel dem Durchmesser des Magnetmittels 27. Die Ankerplatte 29 kann durch verschiedene Dicken zu verschiedenen Sättigungsgraden des Magnetmittels 27, das heißt zu verschieden starken Magnetkräften führen. Hierdurch kann eine genaue Abstufung der Auslösekräfte erreicht werden.

Eine Rücksetzung des Sicherheitsventils von der Schließstellung in die Offenstellung wird durch eine Rücksetzeinrichtung 30 erreicht. Die Rücksetzeinrichtung 30 sieht einen radial von außen in Richtung auf den Dichtring 6 verlagerbaren Lüftungsstift vor, der von außen betätigt werden kann, so dass der Dichtring 6 von seinem Nutgrund abgehoben werden kann. Dies führt zu einer geringfügigen Initialströmung, die einen Druckausgleich zwischen den vor und hinter dem Ventilsitz 5 liegenden Bereichen ermöglicht. Durch Abgleichung der Drücke kann die Feder 18 den Schließkörper 8 wieder in die Offenstellung verlagern, so dass die Gasleitung durchgängig ist.

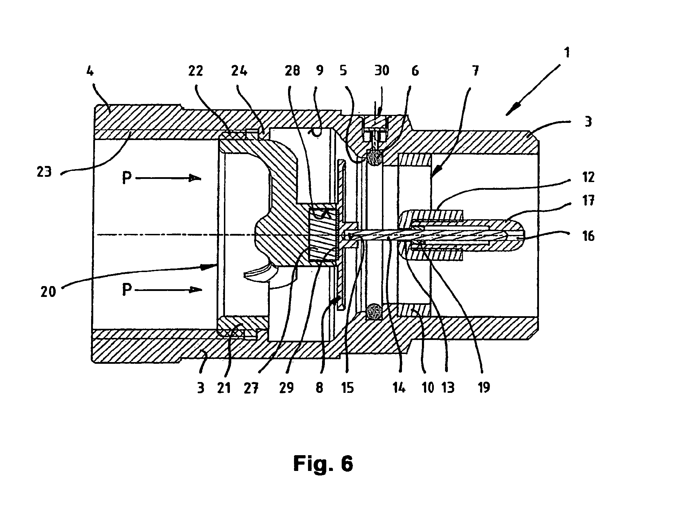

Figur 6 zeigt ein nicht erfindungsgemäßen Beispiel, das in allen Merkmalen demjenigen der Figuren 1 bis 5 entspricht, mit der Ausnahme, dass keine Feder vorgesehen ist. Die Rückstellung des Schließkörpers 8 erfolgt ausschließlich über das Magnetmittel 27.

### Bezugszeichen:

- 1 -: Sicherheitsventil
- 2 -: Gehäuse
- 3 -: Gewindeanschluss
- 4 -: Gewindeanschluss
- 5 -: Ventilsitz
- 6 -: Dichtring
- 7 -: Führungsbrücke
- 8 -: Schließkörper
- 9 -: Aussparung
- 10 -: Ringabschnitt v. 7
- 11 -: Haltebrücke
- 12 -: Führungsnabe
- 13 -: Führungsbohrung
- 14 -: Führungsbolzen
- 15 -: Sackbohrung
- 16 -: Führungsbohrung
- 17 -: Führungshülse
- 18 -: Feder
- 19 -: Kragen
- 20 -: Fixierbrücke
- 21 -: Ringabschnitt
- 22 -: Außengewinde
- 23 -: Innengewinde
- 24 -: Anschlag
- 25 -: Stützbein
- 26 -: Nabe
- 27 -: Magnetmittel
- 28 -: Tasche
- 29 -: Ankerplatte
- 30 -: Rücksetzeinrichtung
- P -: Pfeil

## Patentansprüche

1. Sicherheitsventil zum automatischen Absperren von Gasleitungen, mit einem in die Gasleitung eingliederbaren Gehäuse (2), in welchem ein Ventilsitz (5) für einen tellerförmigen Schließkörper (8) angeordnet ist und mit einer Führungsbrücke (7), gegenüber welcher der Schließkörper (8) axial verschieblich gelagert ist, wobei der Schließkörper (8) einen Führungsbolzen (14) aufweist, der in einer Führungsbohrung (13) der Führungsbrücke (7) gelagert ist und wobei der Schließkörper (8) in einer in Strömungsrichtung vor dem Ventilsitz (5) liegenden Offenstellung gehalten ist wenn ein Maximalfluss des Gases nicht überschritten wird und durch einen den Maximalfluss übersteigenden Fluidfluss gegen den Ventilsitz (5) bewegt wird, um einen den Ventilsitz (5) nachgeordneten Bereich des Sicherheitsventils abzuriegeln, **dadurch gekennzeichnet, dass** der Schließkörper (8) von einer Magnetkraft in der Offenstellung an einer von der Führungsbrücke (7) beabstandeten Fixierbrücke (20) gehalten ist, wobei an dem Schließkörper (8) eine Ankerplatte (29) angeordnet ist, die von einem an der Fixierbrücke (20) platzierten zylindrisch ausgebildeten Magnetmittel (27) angezogen wird und wobei eine Rückstellkraft von einer den Führungsbolzen (14) umgebenden Feder (18) aufgebracht wird.

2. Sicherheitsventil nach Anspruch 1, **dadurch gekennzeichnet, dass** eine Rückstellkraft von dem Magnetmittel (27) aufgebracht wird.

3. Sicherheitsventil nach Anspruch 1 oder 2, **dadurch gekennzeichnet, dass** der Führungsbolzen (14) von einer mit der Führungsbrücke (7) verbundenen Führungshülse (17) umgeben ist.

4. Sicherheitsventil nach Anspruch 3, **dadurch gekennzeichnet, dass** die Führungshülse (17) mit der Führungsbrücke (7) verschraubt ist, so dass die Vorspannung der Feder (18) durch die Einschraubtiefe der Führungshülse (17) stufenlos einstellbar ist.

5. Sicherheitsventil nach Anspruch 4, **dadurch gekennzeichnet, dass** der Führungsbolzen (14) in einer Führungsbohrung (16) der Führungshülse (17) gelagert ist.

## Claims

1. A safety valve for the automatic shutting off of gas lines having a casing (2) capable of being fitted into the gas line, in which a valve seat (5) for a dish-shaped closing body (8) is arranged, and having a guiding bridge (7), against which the closing body (8) is supported in such a way as to be capable of axial displacement, the closing body (8) exhibiting a guiding bolt (14), which is supported in a guiding bore (13) in the guiding bridge (7), and the closing body (8) being retained in an open position situated in the direction of flow ahead of the valve seat (5), in the direction of flow, if a maximum flow of the gas is not exceeded, and being caused to move against the valve seat (5) by a fluid flow exceeding the maximum flow, in order to close an area of the safety valve situated behind the valve seat (5), **characterized in that** the closing body (8) is retained by a magnetic force in the open position against a fixing bridge (20) situated at a certain distance from the guiding bridge (7), whereby an anchor plate (29) is arranged at the closing body (8), which is attracted by a magnetic means (27) positioned on the fixing bridge (20) and whereby a return force is applied by a spring (18) surrounding the guide bolt (14).

2. The safety valve according to Claim 1, **characterized in that** a return force is applied by the magnetic means (27).

3. The safety valve according to Claim 1 or 2, **characterized in that** the guiding bolt (14) is surrounded by a guide sleeve (17) connected to the guiding bridge (7).

4. The safety valve according to one of Claims 1 to 3, **characterized in that** the guide sleeve (17) is screwed to the guiding bridge (7), so that the pre-tension of the spring (18) is continuously adjustable by the depth to which the guide sleeve (17) is screwed in.

5. The safety valve according to one of Claims 1 to 4, **characterized in that** the guiding bolt (14) is supported in a guiding bore (16) in the guide sleeve (17).

## Revendications

1. Soupape de sûreté pour la fermeture automatique de conduites de gaz avec un boîtier (2) pouvant être intégré dans la conduite de gaz, dans lequel est disposé un siège de soupape (5) pour un obturateur (8) en forme de disque et avec un pont de guidage (7), par rapport auquel l'obturateur (8) est logé à déplacement axial, l'obturateur (8) présentant une broche de guidage (14) qui est logée dans un perçage de guidage (13) du pont de guidage (7) et l'obturateur (8) étant maintenu dans une position ouverte se trouvant devant le siège de soupape (5) dans le sens d'écoulement si un flux maximal de gaz n'est pas dépassé et est déplacé par un flux de fluide dépassant le flux maximal contre le siège de soupape (5) afin de verrouiller une zone de la soupape de sûreté en aval du siège de soupape (5), **caractérisée en ce que** l'obturateur (8) est maintenu par une force magnétique dans la position ouverte sur un pont de fixation (20) espacé du pont de guidage (7), sur l'obturateur (8) étant disposée une plaque d'ancrage (29) qui est sollicitée par un moyen magnétique (27) réalisé de manière cylindrique, placé sur le pont de fixation (20) et une force de rappel étant appliquée par un ressort (18) entourant la broche de guidage (14).

2. Soupape de sûreté selon la revendication 1, **caractérisée en ce qu'**une force de rappel est appliquée par le moyen magnétique (27).

3. Soupape de sûreté selon la revendication 1 ou 2, **caractérisée en ce que** la broche de guidage (14) est entourée par une douille de guidage (17) reliée au pont de guidage (7).

4. Soupape de sûreté selon la revendication 3, **caractérisée en ce que** la douille de guidage (17) est vissée au pont de guidage (7) de sorte que la précontrainte du ressort (18) puisse être réglée en continu par la profondeur filetée de la douille de guidage (17).

5. Soupape de sûreté selon la revendication 4, **caractérisée en ce que** la broche de guidage (14) est logée dans un perçage de guidage (16) de la douille de guidage (17).
